# EUROPEAN PATENT APPLICATION

(11) **EP 4 773 656 A1**
(43) Date of publication of application: **08.07.2026**
(21) Application number: 24876041.5
(22) Date of filing: 30.05.2024
(51) Int. Cl.: H04W 24/02

(54) **COMMUNICATION METHOD AND APPARATUS, AND STORAGE MEDIUM**

(30) Priority: 13.10.2023 CN 202311333439
(71) Applicant: ZTE Corporation, Shenzhen, Guangdong 518057 (CN)
(72) Inventor: HAN, Zhiqiang, Shenzhen, Guangdong 518057 (CN); JIANG, Chuangxin, Shenzhen, Guangdong 518057 (CN); LOU, Junpeng, Shenzhen, Guangdong 518057 (CN); YANG, Qi, Shenzhen, Guangdong 518057 (CN); PENG, Focai, Shenzhen, Guangdong 518057 (CN)
(74) Representative: Ziebig Hengelhaupt Intellectual Property Attorneys Patentanwaltskanzlei PartGmbB
(86) International application number: PCT/CN2024/096425
(87) International publication number: WO 2025/077215

(57) **Abstract**

Provided in the present disclosure are a communication method and apparatus, and a storage medium. The communication method comprises: receiving a first message sent by a first network element, wherein the first message comprises auxiliary communication data, and the auxiliary communication data is configured to optimize a communication function of a communication device.

## Description

This application claims priority to Chinese Patent Application No. 202311333439.1, filed on October 13, 2023, the entire content of which is incorporated herein by reference.

### TECHNICAL FIELD

The present disclosure relates to the field of wireless communications, and in particular, relates to a communication method and apparatus, and a storage medium.

### BACKGROUND

With the advancement of communication technologies, mobile communication systems are now required not only to meet people's communication needs but also to support capabilities such as positioning and sensing. These capabilities, including positioning and sensing, may assist communication by optimizing communication processes or reducing communication overhead. Therefore, the integration of sensing capabilities into future mobile communication systems is an essential potential evolution direction.

### SUMMARY

In one aspect, a communication method applied to a communication device is provided. The communication method includes: receiving a first message sent from a first network element, where the first message includes auxiliary communication data, and the auxiliary communication data is used to optimize a communication function of the communication device.

In another aspect, a communication method applied to a first network element is provided. The communication method includes: sending a first message to a communication device, where the first message includes auxiliary communication data, and the auxiliary communication data is used to optimize a communication function of the communication device.

In yet another aspect, a communication apparatus applied to a communication device is provided. The communication apparatus includes: a receiving module, configured to receive a first message sent from a first network element, where the first message includes auxiliary communication data, and the auxiliary communication data is used to optimize a communication function of the communication device.

In yet another aspect, a communication apparatus applied to a first network element is provided. The communication apparatus includes: a sending module, configured to send a first message to a communication device, where the first message includes auxiliary communication data, and the auxiliary communication data is used to optimize a communication function of the communication device.

In yet another aspect, a communication apparatus is provided. The communication apparatus includes: a memory and a processor. The memory is coupled to the processor; the memory is configured to store a computer program; and the processor, upon executing the computer program, implements any one of the aforementioned communication methods.

In yet another aspect, a computer-readable storage medium is provided. The computer-readable storage medium stores computer program instructions, which, upon being executed by a processor, implement any one of the aforementioned communication methods.

In yet another aspect, a computer program product is provided. The computer program product includes computer program instructions, which, upon being executed by a processor, implement any one of the aforementioned communication methods.

### BRIEF DESCRIPTION OF THE DRAWINGS

In order to more clearly illustrate the technical solutions in the present disclosure, the drawings required for usage in some embodiments of the present disclosure will be briefly described below. Obviously, the drawings in the following description are only for some embodiments of the present disclosure, and other drawings may be obtained by those of ordinary skill in the art based on these drawings without creative effort.
FIG. 1 is a schematic architectural diagram of a mobile communication system according to some embodiments of the present disclosure.
FIG. 2 is a schematic architectural diagram of another mobile communication system according to some embodiments of the present disclosure.
FIG. 3 is a schematic architectural diagram of yet another mobile communication system according to some embodiments of the present disclosure.
FIG. 4 is a flowchart of a communication method according to some embodiments of the present disclosure.
FIG. 5 is a flowchart of another communication method according to some embodiments of the present disclosure.
FIG. 6 is a schematic diagram of a scenario according to some embodiments of the present disclosure.
FIG. 7 is a flowchart of yet another communication method according to some embodiments of the present disclosure.
FIG. 8 is a flowchart of yet another communication method according to some embodiments of the present disclosure.
FIG. 9 is a flowchart of yet another communication method according to some embodiments of the present disclosure.
FIG. 10 is a flowchart of yet another communication method according to some embodiments of the present disclosure.
FIG. 11 is a flowchart of yet another communication method according to some embodiments of the present disclosure.
FIG. 12 is a flowchart of yet another communication method according to some embodiments of the present disclosure.
FIG. 13 is a flowchart of yet another communication method according to some embodiments of the present disclosure.
FIG. 14 is a flowchart of yet another communication method according to some embodiments of the present disclosure.
FIG. 15 is a flowchart of yet another communication method according to some embodiments of the present disclosure.
FIG. 16 is a schematic structural diagram of a communication apparatus according to some embodiments of the present disclosure.
FIG. 17 is a schematic structural diagram of another communication apparatus according to some embodiments of the present disclosure.
FIG. 18 is a schematic structural diagram of yet another communication apparatus according to some embodiments of the present disclosure.

### DETAILED DESCRIPTION

The technical solutions in the present disclosure will be described clearly and completely below with reference to the accompanying drawings in the present disclosure. Obviously, the described embodiments are only part of the embodiments of the present disclosure, rather than all of the embodiments of the present disclosure. All other embodiments obtained by a person of ordinary skill in the art based on the embodiments of the present disclosure without creative efforts shall fall within the protection scope of the present disclosure.

It should be noted that in this disclosure, terms such as "exemplary" or "for example " are used to mean serving as an example, instance, or illustration. Any embodiment or design solution described as "exemplary" or "for example" in the disclosure should not be interpreted as being more preferred or advantageous than other embodiments or design solutions. Rather, the usage of "exemplary" or "for example" is intended to present related concepts in a concrete manner.

In the following, the terms "first", "second", etc., are used for descriptive purpose only and can not be understood as indicating or implying relative importance or implicitly specifying the quantity of the indicated technical features. Thus, features defined by "first", "second", etc., may explicitly or implicitly include one or more of such features.

In the description of this disclosure, unless otherwise specified, "/" means "or", for example, A/B can mean A or B. The "and/or" herein describes only an association relationship between associated objects, indicating that three relationships may exist. For example, A and/or B may indicate: A alone, B alone, and both A and B. Furthermore, "at least one" means one or more, and "a plurality" means two or more.

With the evolution of mobile communication systems, the construction methods of 5G (fifth generation) systems have become more flexible. 5G advanced and further mobile communication systems will continue to evolve based on the advantages of 5G systems. With the emergence of technologies such as business digital twins and holographic communication, mobile communication systems now need to support capabilities such as positioning and sensing in addition to meeting people's communication needs. For example, by introducing millimeter-wave frequency bands, large bandwidth technology, and multi-antenna technology into communication networks, communication networks may be equipped with sensing capability, positioning capability, etc.

It cam be understood that capabilities of positioning, sensing and the like can assist communication, optimize the communication process, or reduce communication overhead, etc. Meanwhile, mobile communication system can also leverage advantages such as wide advantages and large bandwidth, to build a bridge of physical world and virtual world. Therefore, the integration of sensing capabilities into future communication network is an essential potential evolution direction.

For ease of understanding, some use cases of application scenarios for sensing-assisted communication are introduced below.

### 1. Bean Management between base station and terminal

Base station may obtain the location of the terminal and surrounding environment information based on sensing, positioning information (for example, sizes or shapes of buildings or obstacles, etc.). In this way, the base station can narrow the beam scanning range and shorten the beam training time.

### 2. Base Station Resource Scheduling Optimization

Base station may obtain the location of the terminal and surrounding environment information based on sensing, positioning information (for example, sizes or shapes of buildings or obstacles, etc.). Further, whether the line-of-sight (LOS) path exists between the terminal and the base station based on the location and surrounding environment information of the terminal is determined. In response to there is no line-of-sight path between the terminal and the base station, the base station may adjust the beam direction towards a building that assists communication based on the location and surrounding environment information of the terminal, thereby creating a "virtual" LOS path. In this way, communication parameters such as scheduled resource size, MCS can be further optimized.

### 3. UE Mobility Optimization

Base station can obtain the location of the terminal and surrounding environment information based on sensing, positioning information (for example, sizes or shapes of buildings or obstacles, etc.). Then, the base station may provide more auxiliary information for terminal handover, optimize the process of terminal handover, shorten the time of handover.

It can be understoodab that the mobile communication system can open the obtained sensing, positioning, and other information to third-party applications. Meanwhile, the base station may also use information such as sensing, positioning to assist communication. Thus, the information such as sensing, positioning and artificial intelligence (AI) may also be opened to RAN.

However, due to the security and privacy problem, the RAN can not store the user information, such as sensing and positioning information including the movement of dynamic target (e.g., humans, vehicles, animals etc.),and environmental information(e.g., shapes and sizes of buildings, etc.). Therefore, the radio access network cannot yet utilize sensing information to assist communication.

To address the issues mentioned above, the embodiments of the present disclosure provide a communication method. The concept of this communication method is that a communication device may receive a first message sent from a first network element, the first information includes auxiliary communication data, and the auxiliary communication data is used to optimize the communication function of the communication device. It can be seen that the communication method provided by the embodiments of the present disclosure may enable the communication device to obtain auxiliary communication data, and further optimize the communication function of the communication device based on the auxiliary communication data, thereby improving communication performance..

The mobile communication system provided by the embodiments of the present disclosure is described in detail below with reference to the accompanying drawings.

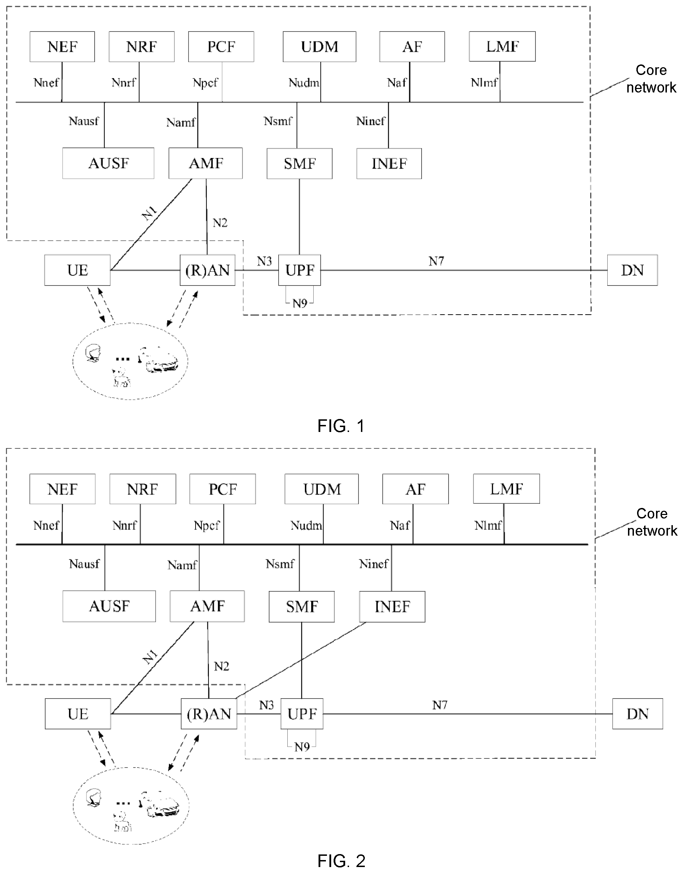

Referring to FIG. 1, FIG. 1 is a schematic architectural diagram of a mobile communication system according to the embodiments of the present disclosure. As shown in FIG. 1, the mobile communication system includes: a core network (CN), a radio access network (RAN), a user equipment (UE) and a data network (DN).

The core network has multiple network functions (NFs), and various NFs can access each other through service-based interfaces. Exemplarily, the main network functions (NFs) of the core network include: user plane function (UPF), unified data management (UDM), authentication server function (AUSF), session management function (SMF), access and mobility management function (AMF), network exposure function (NEF), NF repository function (NRF), application function (AF), policy control function (PCF), and location management function (LMF).

The user plane function (UPF), as the user plane access NF of the network, is primarily responsible for functions such as packet routing and forwarding of user plane data, policy implementation, and traffic reporting processing.

UPFs can be interconnected via the user plane interface N9, which is used for transmitting uplink and downlink user data streams between UPFs.

The unified data management (UDM) is responsible for the unified management of user data such as user subscription information and security information, as well as related functions including user identification, access authorization, and mobility management.

The authentication server function (AUSF), serving as the authentication center of the network, is primarily responsible for providing authentication and access authorization for users.

The session management function (SMF) is primarily responsible for functions such as tunnel maintenance, allocation and management of Internet protocol (IP) addresses, user plane (UP) management, policy implementation, charging data collection, and roaming.

The access and mobility management function (AMF), as the control plane access NF for users, is primarily responsible for functions such as user registration management, connection management, reachability management, security management, and mobility management.

The network exposure function (NEF) supports interaction between third-party Application Functions (AFs) and various network elements in the core network through the NEF. By way of example, the NEF may also be referred to as an external capability exposure network element.

The NF repository function (NRF) is primarily responsible for the registration and management of various NFs within the network.

The application function (AF) refers to third-party applications that interact directly or indirectly with the 5G network.

The policy control function (PCF) is a network element within the policy and charging control architecture, capable of providing policy rules for control plane functions.

The location management function (LMF) is primarily responsible for location process control and fulfilling the positioning function of the user equipment.

The terminal device communicates with the AMF via the next generation (N)1 interface (abbreviated as N1), the RAN device communicates with the AMF via the N2 interface (abbreviated as N2), the RAN device communicates with the UPF via the N3 interface (abbreviated as N3), the UPF communicates with the SMF via the N4 interface (abbreviated as N4), and the UPF communicates with the DN via the N6 interface (abbreviated as N6).

Control plane network elements such as AMF, SMF, UDM, AUSF, or PCF may also interact using service-based interfaces. For example, as shown in FIG. 1, the service-based interface provided by the AMF may be Namf; the service-based interface provided by the SMF may be Nsmf; the service-based interface provided by the UDM may be Nudm; the service-based interface provided by the PCF may be Npcf; the service-based interface provided by the AUSF may be Nausf; which will not be described exhaustively herein.

In some embodiments, the core network further includes: an Internal Network Exposure Function (INEF), primarily responsible for exposing 5G core network capabilities to the RAN. For example, the INEF is used to expose capabilities to 3rd Generation Partnership Project (3GPP) networks, the RAN, or terminal devices, to assist communication of the RAN and/or terminal devices. For instance, the INEF can internally output information such as terminal location and surrounding environment information, thereby enabling the RAN to optimize communication.

By way of example, the INEF may be a newly added network element in the core network; or, the INEF may be supported by enhancing the capabilities of relevant network elements in the core network. For example, the INEF may be an enhanced NEF network element, or an enhanced AMF network element, etc.

By way of example, as shown in FIG. 1, there is no direct communication interface between the INEF and the RAN, and communication needs to occur through the communication access between the RAN and the core network; or, as shown in FIG. 2, there is a direct communication interface between the INEF and the RAN, allowing direct communication.

In some embodiments, the functions of the INEF include at least one of: exposing network capabilities to the RAN and/or UE; registering with the NRF; performing conversion between global identifiers and local identifiers (e.g., local identifier, local area network identifier, or temporary identifier); hiding user or network sensitive information.

In some embodiments, the differences between the INEF and the NEF include that: the INEF exposes capabilities to the RAN and/or UE to improve network communication quality or performance, and typically does not require charging for such services, whereas the NEF is responsible for exposure to third-party applications and requires charging; the INEF needs to be deployed closer to the RAN, while the NEF needs to be deployed closer to third-party applications.

A user equipment is a device with wireless transceiving functionality, which may be deployed on land, including indoors or outdoors, handheld, wearable, or vehicle-mounted; may also be deployed on water (e.g., ships, etc.); and may also be deployed in the air (e.g., on airplanes, balloons, and satellites, etc.). The UE can be a mobile phone, a tablet, a computer with wireless transceiving functionality, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc.

RAN is a type of access network (AN). RAN refers to an AN that introduces some or all of the AN to wireless transmission media to provide fixed terminal services and/or mobile terminal services to users.

By way of example, the RAN is a terrestrial infrastructure. For instance, the RAN may be a base station (BS).

A data network (DN) corresponds to operator services, Internet access, or third-party services, etc. By way of example, third-party applications (Apps) may be deployed in the DN.

As can be seen from FIGS. 1 and 2, the RAN and UE can perceive the physical world to obtain characteristics of the physical world, such as information about people, animals, vehicles, e.g., location, speed, etc.

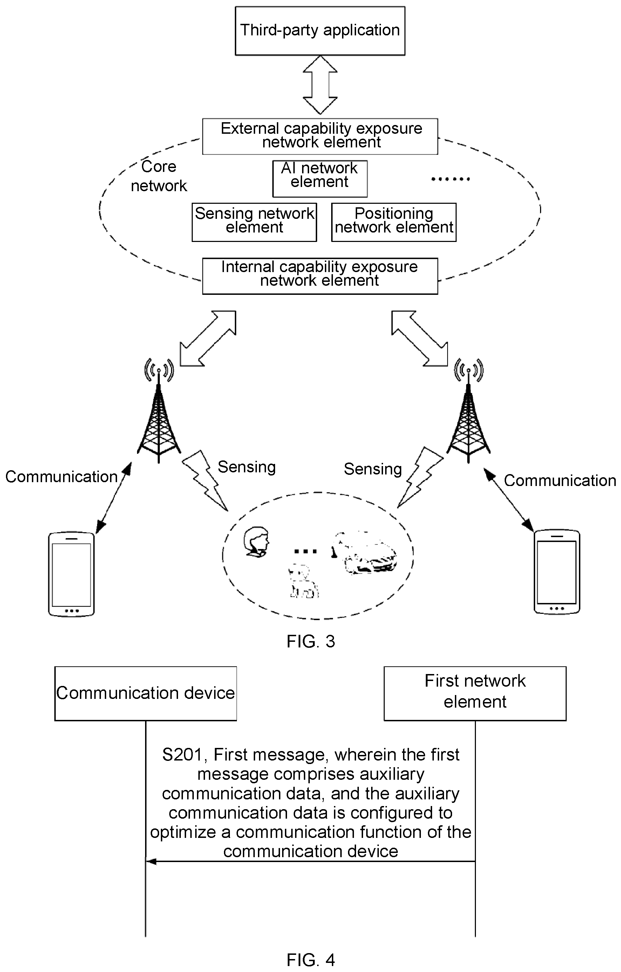

In some embodiments, as shown in FIG. 3, yet another mobile communication system according to the embodiments of the present disclosure can be used in integrated sensing and communication scenarios to obtain sensing data to assist communication. As shown in FIG. 3, the mobile communication system includes a sensing network element, a positioning network element, and an Al network element. The sensing network element is used for sensing service requests and responses, collecting and processing sensing data acquired by the RAN and UE, and controlling the sensing process. The positioning network element is used for positioning service requests and responses, collecting and processing positioning data acquired by the RAN and UE, and controlling the positioning process. The Al network element is used for collecting and/or processing Al data of the network and providing Al information internally and externally.

By way of example, the sensing network element may be a network element in the core network, or part of the radio access network. The positioning network element may be a network element in the core network, or a component of the radio access network. The Al network element may be a network element in the core network, or a component of the radio access network.

In some embodiments, the mobile communication system provides internal and external network capability exposure functions, offering sensing, positioning, Al information, or authorization to external third-party applications and the internal RAN. The RAN and user equipment are responsible for executing sensing processes, Al processes, and positioning processes, as well as collecting sensing, Al, and positioning data.

In some embodiments, the RAN and UE may request sensing, Al, and positioning data from the mobile communication system to assist communication.

It should be understood that the embodiments of the present disclosure do not limit the functional network elements included in the mobile communication system. In some embodiments, the mobile communication system may also add new functional network elements or enhance the capabilities of relevant network elements to provide new capabilities internally and externally. The newly added functional network elements or enhanced relevant network elements may also operate based on the methods in the present disclosure.

It should be noted that the application scenarios of the embodiments of the present disclosure are not limited. The system architecture and business scenarios described in the embodiments of the present disclosure are intended to illustrate the technical solutions of the embodiments of the present disclosure more clearly and do not constitute a limitation on the technical solutions provided by the embodiments of the present disclosure. Those of ordinary skill in the art will understand that as network architectures evolve and new business scenarios emerge, the technical solutions provided by the embodiments of the present disclosure are equally applicable to similar technical problems.

The communication method provided by the embodiments of the present disclosure is introduced below.

The present disclosure provides a communication method. As shown in FIG. 4, the communication method includes the following S201.

In S201, a first network element sends a first message to a communication device. Correspondingly, the communication device receives the first message sent from the first network element.

It should be noted that the aforementioned communication device may be a base station or a terminal; the aforementioned first network element may be a newly added functional network element in the core network, such as a newly added INEF network element, or the first network element may be an enhanced relevant network element in the core network, such as an enhanced NEF network element or an enhanced AMF network element, etc., which is not limited in the embodiments of the present disclosure.

The first message includes auxiliary communication data, and the auxiliary communication data is used to optimize the communication function of the communication device.

In some embodiments, the auxiliary communication data includes at least one of: sensing auxiliary data, positioning auxiliary data, artificial intelligence (AI) auxiliary data, resource configuration auxiliary data. These four categories of auxiliary communication data are described below.

### 1. Sensing auxiliary Data

In some embodiments, the sensing auxiliary data includes at least one of: a sensing area, a sensing type, a sensing time, a sensing dimension, a characteristic of a sensing target, an identifier of a reference base station, or a location of a reference base station.

The sensing type includes at least one of: weather monitoring, environment reconstruction, or object detection. The characteristic of the sensing target include at least one of: a sensing target size, a sensing target location, a location of a sensing target relative to the reference base station, a sensing target movement speed, a sensing target movement direction, a rainfall, a snowfall, a flood water surface level change, a line-of-sight (LOS) or a non-line-of-sight (NLOS).

In some embodiments, different sensing types correspond to different target characteristics for sensing. For example, in response to the sensing type is weather detection, the characteristic of the sensing target include rainfall and/or snowfall, flood water level change, etc.; in response to the sensing type is environment reconstruction, the characteristic of the sensing target include a sensing target size, a sensing target location, a location of sensing target relative to the reference base station, a sensing target movement speed, or a sensing target movement direction; in response to the sensing type is object detection, the characteristic of the sensing target include LOS or NLOS.

### 2. Positioning Auxiliary Data

In some embodiments, the positioning auxiliary data includes: an identifier of a terminal and positioning information corresponding to the identifier of the terminal. The identifier of the terminal includes at least one of: a local identifier, a local area network identifier, a temporary identifier, or a global identifier. For example, the positioning auxiliary data can be represented as: <terminal identifier, positioning information>, e.g., <UE1, positioning information>, <UE2, positioning information>, <UE3, positioning information>.

The positioning information includes at least one of: the global location of the user equipment, the location of the terminal relative to a reference base station, the angle of the terminal relative to a reference base station, the distance of the terminal from a reference base station, the movement speed of the terminal, the movement direction of the terminal, the moving trajectory of the terminal.

### 3. Al Auxiliary Data

In some embodiments, the Al auxiliary data includes at least one of: current information about a channel, or predicted information about a channel.

### 4. Resource Configuration Auxiliary Data

In some embodiments, the resource configuration auxiliary data includes at least one of: a time-domain resource, a frequency-domain resource, a beam transmission direction, modulation and coding scheme (MCS), or a change frequency of a transmission resource.

In some embodiments, the first message further includes a validity period for the auxiliary communication data.

In some embodiments, the first message further includes a message response type, which is used to indicate the type of subsequent response. For example, the message response type includes at least one of: an event-triggered response, a periodic response, or a request response.

In some embodiments, in response to the message response type includes an event-triggered response, the aforementioned S201 may be implemented as: in response to a first condition is met, the first network element sends the first message to the communication device.

The first condition includes at least one of: detecting a change in an LOS path between the communication device and a terminal; detecting a change in a location of a terminal; detecting a change in locations of objects around a terminal; detecting a change in the number of objects around a terminal; detecting a change in weather; or detecting a change in channel.

For example, the change in the LOS path between the communication device and the terminal can include: the LOS path between the communication device and the terminal changing from existing to non-existing; or, the LOS path between the communication device and the terminal changing from non-existing to existing.

For example, upon detecting a change (or offset) in the terminal's location, it indicates that the terminal's location has changed compared to its original position. Furthermore, the first network element may actively send the first message to the communication device in response to that the change in the terminal's location exceeding a preset change amount is detected.

For example, upon detecting a change (or offset) in the position of objects around the terminal, it indicates that the positions of objects around the terminal have changed. Furthermore, the first network element may actively send the first message to the communication device in response to that the change in the position of objects around the user equipment exceeding a preset change amount is detected.

For example, a weather change refers to a change in the weather within the coverage region of the communication device (e.g., a base station), such as changing from sunny to rainy, or from light rain to heavy rain, etc.

In some embodiments, in response to the message response type includes a periodic response, the aforementioned S201 may also be implemented as: the first network element sends the first message to the communication device according to a preset transmission period.

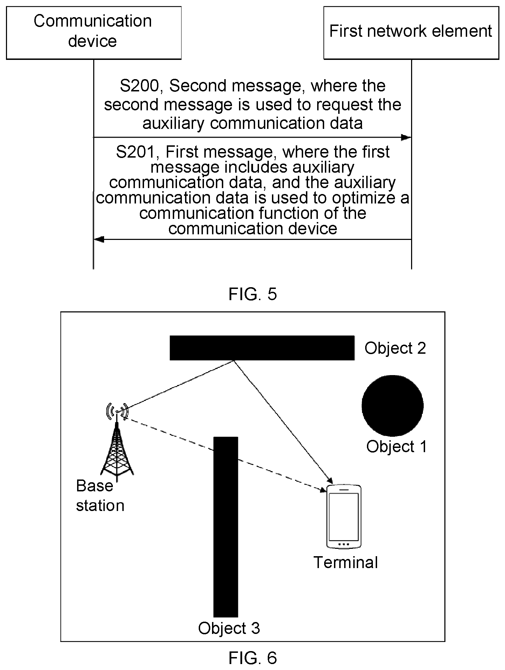

In some embodiments, as shown in FIG. 5, before the aforementioned S201, the communication method further includes the following S200.

In S200, the communication device sends a second message to the first network element. Correspondingly, the first network element receives the second message.

The second message is used to request auxiliary communication data.

In some embodiments, the second message includes at least one of: an identifier of the communication device, or a characteristic of the requested auxiliary communication data.

The characteristic of the requested auxiliary communication data include at least one of: the type of auxiliary communication data, an auxiliary area, or an identifier of a terminal. The identifier of the terminal includes at least one of: a local identifier, a local area network identifier, a temporary identifier, or a global identifier. It should be understood that in the case of multiple terminals, the identifier of each terminal can be treated as one set of data.

For example, in response to the type of auxiliary communication data included in the second message is sensing auxiliary data, the second message is used to request sensing auxiliary data; in response to the type included is positioning auxiliary data, the second message is used to request positioning auxiliary data; in response to the type included is Al auxiliary data, the second message is used to request Al auxiliary data; in response to the type included is resource configuration auxiliary data, the second message is used to request resource configuration auxiliary data.

In some embodiments, in response to the message response type includes a request response, the aforementioned S201 may be implemented as: in response to the second message, the first network element sends the first message to the communication device.

For example, in response to the second message is used to request sensing auxiliary data, the first message includes sensing auxiliary data. For instance, the first message may include at least one of: a sensing target size, a sensing target location, a location of a sensing target relative to a reference base station, a sensing target movement speed, or a sensing target movement direction. If the second message includes a terminal identifier, the first message may further include at least one of: whether an LOS path exists between the terminal and the communication device, a location of a terminal relative to a reference base station, the terminal's movement direction, and the terminal's movement speed.

For example, in response to the second message is used to request positioning auxiliary data, the first message includes positioning auxiliary data. For instance, the first message may include at least one of: the global location of the terminal, a location of the terminal relative to a reference base station, the angle of the terminal relative to a reference base station, the distance of the terminal from a reference base station, the terminal's movement speed, the terminal's movement direction, or the terminal's moving trajectory.

For example, in response to the second message is used to request Al auxiliary data, the first message includes Al auxiliary data. For instance, the first message may include at least one of: current information about a channel, and predicted information about a channel.

For example, in response to the second message is used to request resource configuration auxiliary data, the first message includes resource configuration auxiliary data. For instance, the first message may include at least one of: transmission resource configuration, or a change frequency of a transmission resource.

It should be understood that, based on the communication method provided by the embodiments of the present disclosure, the communication device may receive the first message sent from the first network element, where the first message includes auxiliary communication data used to optimize the communication function of the communication device. It can be seen that the communication method provided by the embodiments of the present disclosure enables the communication device to obtain data that assists communication, thereby optimizing the communication function of the communication device and improving communication performance based on the auxiliary communication data.

For ease of understanding, the communication method provided by the embodiments of the present disclosure is explained below in the form of a scenario.

As an example, consider an integrated sensing and communication scenario according to an embodiment of the present disclosure. As shown in FIG. 6, the scenario includes: a base station, a terminal, and three sensing targets (i.e.: Object 1, Object 2, and Object 3).

Assuming the communication device is the base station, the base station may send a second message to the first network element to request sensing auxiliary data and positioning auxiliary data. The second message may include: an identifier of the base station and a characteristic of the requested auxiliary communication data. The characteristic of the requested auxiliary communication data include: a type of auxiliary communication data and an identifier of the terminal, where the type of auxiliary communication data includes sensing auxiliary data and positioning auxiliary data. After receiving the second message, if the terminal identifier is a local identifier, a local area network identifier, or a temporary identifier, the first network element needs to convert the terminal identifier into a global identifier and acquire the sensing auxiliary data and positioning auxiliary data.

Exemplarily, in the scenario shown in FIG. 6, the sensing auxiliary data acquired by the first network element includes the size, location, and movement information of three sensing targets (Object 1, Object 2, and Object 3). The sizes of the three sensing targets may be two-dimensional or three-dimensional. For privacy and security considerations, the locations of the three sensing targets may be: the locations of the three sensing targets relative to the reference base station, and the movement information of the three sensing targets (including a movement direction and a movement speed). Meanwhile, for privacy and security considerations, the positioning auxiliary data acquired by the first network element may be the location of the terminal relative to the reference base station. It should be noted that the reference base station herein is the base station shown in FIG. 6.

The positioning auxiliary data acquired by the first network element may also include location information of at least one UE.

In response to a second message sent from the base station, the first network element sends a first message to the base station, where the first message includes the sensing auxiliary data and the positioning auxiliary data. The first network element may indicate the identifier and/or location of the reference base station in the first message.

In some embodiments, the base station optimizes beamforming, resource allocation, mobility, etc., based on the sensing auxiliary data and positioning auxiliary data in the first message.

Exemplarily, after receiving the sensing auxiliary data and positioning auxiliary data, the base station determines whether an LOS path exists between the base station and the terminal. If no LOS path exists between the base station and the terminal, the beam transmitted by the base station would be directly directed towards the terminal, which would result in poor reception quality at the terminal. In this case, the base station can utilize surrounding objects to create a "virtual" LOS path. For example, the base station can use Object 2 to create a "virtual" LOS path; the base station can direct the beam towards Object 2, utilizing Object 2 to reflect the beam to the terminal.

Exemplarily, after receiving the sensing auxiliary data and positioning auxiliary data, the base station can configure downlink (DL) or uplink (UL) communication resources based on the sensing auxiliary data and positioning auxiliary data. The DL or UL communication resources correspond to the beam transmitted by the base station.

In some embodiments, the base station may also send a second message to the first network element to request resource configuration auxiliary data. The second message may include: an identifier of the base station and a characteristic of the requested auxiliary communication data. The characteristic of the requested auxiliary communication data include: the type of the requested auxiliary communication data (in this embodiment, the type of the requested auxiliary communication data is resource configuration auxiliary data), and an identifier of the terminal. Correspondingly, after receiving the second message, if the terminal identifier is a local identifier, a local area identifier, or a temporary identifier, the first network element needs to convert the terminal identifier to a global identifier and acquire the resource configuration auxiliary data.

As an optional implementation, in the scenario shown in FIG. 6, after receiving the second message, the first network element determines whether an LOS path exists between the base station and the terminal based on the second message, sensing information collected by the first network element, the terminal's location information, the base station's location information, etc. If no LOS path exists between the base station and the user equipment, the first network element can create a "virtual" LOS path based on the location and size of Object 2 and generate resource configuration auxiliary data for this "virtual" LOS path.

The resource configuration auxiliary data is used to indicate the communication resources for the beam of the DL transmission from the base station to the terminal, or the communication resources for the beam of the UL transmission from the terminal to the base station.

As another optional implementation, the base station or the first network element may also dynamically generate resource configuration auxiliary data using movement information of objects in the surrounding environment or movement information of the terminal.

Furthermore, the first network element sends a first message to the base station, where the first message includes the resource configuration auxiliary data generated by the first network element. In some embodiments, the first network element may further carry suggestions for the uplink and downlink communication resources of the terminal in the first message, i.e., the time-frequency domain resource of the beam corresponding to this "virtual" LOS path. Optionally, the first network element may further carry suggestions for the uplink and downlink communication resources of multiple terminals in the first message .

Correspondingly, after receiving the first message sent from the first network element, the base station may configure the DL or UL communication resources for the terminal based on the resource configuration auxiliary data included in the first message. The aforementioned DL or UL communication resources correspond to the aforementioned "virtual" LOS path.

It can be seen that, based on the communication method provided by the embodiments of the present disclosure, the base station may optimize beamforming, resource configuration, mobility, etc., according to the acquired auxiliary communication data, which can effectively improve the communication performance of the base station.

In some embodiments, the aforementioned communication method further includes: receiving, by the first network element, auxiliary communication data sent from a third network element. The third network element is a network element capable of providing auxiliary communication data.

Exemplarily, the aforementioned reception of auxiliary communication data sent from the third network element by the first network element may be implemented in the following three implementations.

In the first implementation, the third network element sends the auxiliary communication data to the first network element based on a request from the first network element.

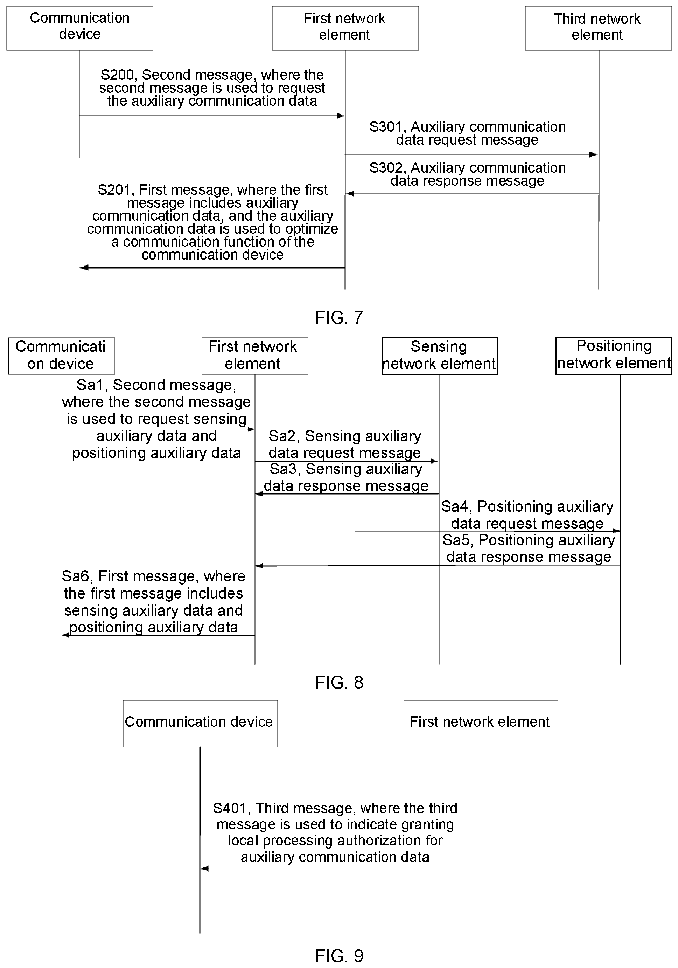

Exemplarily, after the aforementioned S200, as shown in FIG. 7, the aforementioned communication method further includes the following S301 and S302.

In S301, the first network element selects a third network element according to the second message and sends auxiliary communication data request message to the third network element. Correspondingly, the third network element receives the auxiliary communication data request message sent from the first network element.

The auxiliary communication data request message includes at least one of: a type of the requested auxiliary communication data, or an identifier of a communication device.

Furthermore, the response type may also be indicated in the auxiliary communication data request message. Exemplarily, the response type may include at least one of: an event-triggered response, a periodic response, a request response. It should be understood that in this implementation, the response type should be a request response.

As an optional implementation, the first network element selects the third network element according to the type of auxiliary communication data included in the second message. The third network element may provide the auxiliary communication data corresponding to the type of auxiliary communication data. The third network element may be one or more network elements, which is not limited in the embodiments of the present disclosure. Exemplarily, assuming the types of auxiliary communication data include sensing auxiliary data and positioning auxiliary data, then the third network element may include a sensing network element and a positioning network element, where the sensing network element is used to provide sensing auxiliary data, and the positioning network element is used to provide positioning auxiliary data.

As another optional implementation, the first network element may also select the third network element based on at least one of: the affiliation of the communication device and the base station, the mapping relationship between the communication device and the third network element, or the aggregation point of the auxiliary communication data of the communication device.

As another optional implementation, the first network element may also select the third network element with the assistance of other network elements. Exemplarily, the first network element may send the type identifier of the auxiliary communication data requested by the second message to a network function registration network element. The network function registration network element, based on the auxiliary communication data type identifier, selects a suitable third network element and sends the identifier of the third network element to the first network element. The network function registration network element is used to store the function and capability information of all network elements registered in the network.

In some embodiments, in response to the terminal identifier included in the second message is a local identifier, a local area network identifier, or a temporary identifier, the first network element is further configured to convert the terminal identifier to a global identifier.

In S302, the third network element sends an auxiliary communication data response message to the first network element. Correspondingly, the first network element receives the auxiliary communication data response message sent from the third network element.

The auxiliary communication data response message includes the auxiliary communication data corresponding to the type of auxiliary communication data. Exemplarily, assuming the type of auxiliary communication data is sensing auxiliary data, then the auxiliary communication data response message includes sensing auxiliary data.

For ease of understanding, the method provided by the first implementation described above is explained below in the form of an example.

Exemplarily, assuming the communication device is a base station, and the types of auxiliary communication data in the second message received by the first network element include sensing auxiliary data and positioning auxiliary data, then the third network element includes a sensing network element and a positioning network element. As shown in FIG. 8, yet another communication method according to the embodiments of the present disclosure can be implemented as the following Sa1 to Sa6.

In Sa1, the base station sends a second message to the first network element. Correspondingly, the first network element receives the second message sent from the base station.

The second message is used to request sensing auxiliary data and positioning auxiliary data. Exemplarily, the second message may include: an identifier of the base station and a characteristic of the requested auxiliary communication data. The characteristic of the requested auxiliary communication data include: a type of the requested auxiliary communication data (in this embodiment, the type is sensing auxiliary data and positioning auxiliary data), and an identifier of the terminal.

In some embodiments, if the terminal identifier included in the second message is a local identifier, a local area network identifier, or a temporary identifier, the first network element is further configured to convert the terminal identifier to a global identifier.

In Sa2, in a case where the request for sensing auxiliary communication data included in the types of requested auxiliary communication data, the first network element selects a sensing network element and sends a sensing auxiliary data request message to the sensing network element. Correspondingly, the sensing network element receives the sensing auxiliary data request message.

The sensing auxiliary data request message includes at least one of: an identifier of the base station, an identifier of a sensing area (used to indicate which areas' sensing data needs to be provided).

Furthermore, the sensing auxiliary data request message may also include at least one of: a sensing type, a characteristic of the sensing target, or a sensing event.

Furthermore, the response type may also be indicated in the sensing auxiliary data request message. Exemplarily, the response type may include at least one of: an event-triggered response, a periodic response, or a request response. It should be understood that in this implementation, the response type should be a request response.

In Sa3, in response to the sensing auxiliary data request message, the sensing network element sends a sensing auxiliary data response message to the first network element. Correspondingly, the first network element receives the sensing auxiliary data response message sent from the sensing network element.

The sensing auxiliary data response message includes sensing auxiliary data. For example, the sensing auxiliary data response message may include at least one of: sensing target size, a sensing target location, a number of sensing targets. Furthermore, in response to indicating characteristics of the sensing target, the sensing auxiliary data response message may also include at least one of: sensing time, sensing auxiliary information (e.g., map information, area information, etc.).

In Sa4, in response to the requested types of auxiliary communication data include positioning auxiliary data, the first network element selects a positioning network element and sends a positioning auxiliary data request message to the positioning network element. Correspondingly, the positioning network element receives the positioning auxiliary data request message.

The positioning auxiliary data request message may include an identifier of the terminal.

Furthermore, the response type may also be indicated in the positioning auxiliary data request message. Exemplarily, the response type may include at least one of: an event-triggered response, a periodic response, or a request response. It should be understood that in this implementation, the response type should be a request response.

In Sa5, in response to the positioning auxiliary data request message, the positioning network element sends a positioning auxiliary data response message to the first network element. Correspondingly, the first network element receives the positioning auxiliary data response message sent from the positioning network element.

The positioning auxiliary data response message includes positioning auxiliary data. For example, the positioning auxiliary data response message may include at least one of: a global location of the terminal, the location of the terminal relative to the reference base station, the angle of the terminal relative to the reference base station, the distance of the terminal from the reference base station, the movement speed of the terminal, the movement direction of the terminal.

In some embodiments, after completing the collection of sensing auxiliary data and positioning auxiliary data, the first network element also converts the global identifier of the terminal to a local identifier, a local area network identifier, or a temporary identifier of the terminal.

In Sa6, in response to the second message, the first network element sends a first message to the base station.

The first message includes the sensing auxiliary data and positioning auxiliary data, as well as the validity period of the sensing auxiliary data and the validity period of the positioning auxiliary data.

In the second implementation, the third network element proactively sends auxiliary communication data to the first network element in response to specific conditions.

Exemplarily, before S201, the aforementioned communication method further includes: in response to a second condition is met, the third network element sends auxiliary communication data to the first network element.

Exemplarily, in response to the third network element includes a sensing network element, the second condition includes at least one of: detection of a change in the terminal 's location; detection of a change in the position of objects around the terminal; detection of a change in the number of objects around the terminal; detection of weather changes; detection of channel changes.

These changes can be controlled by preset thresholds. For example, a change in the position of objects means that the current object position has shifted compared to the previously reported object position by more than a preset threshold, requiring the third network element to send auxiliary communication data to the first network element.

Exemplarily, in response to the third network element includes a positioning network element, the second condition may include at least one of: detection of a change in the terminal's location; detection of a change in the terminal's speed; detection of a change in the distance between the terminal and the reference base station; detection of a change in the LOS path between the communication device and the terminal; detection of a change in the terminal's speed; detection of a change in the height of the terminal relative to the reference base station.

These changes can be controlled by preset thresholds. For example, a location change means that the current location has shifted compared to the previously reported location by more than a preset threshold, requiring the third network element to send auxiliary communication data to the first network element.

In the third implementation, the third network element proactively sends auxiliary communication data to the first network element according to a preset period.

Exemplarily, before the aforementioned S200, the communication method further includes: sending, by the third network element, auxiliary communication data to the first network element according to a preset period. Correspondingly, the first network element receives the auxiliary communication data sent from the third network element.

The preset period can be one second, one minute, one hour, one day, one week, or one month, etc., which is not limited in the embodiments of the present disclosure.

In some embodiments, the aforementioned communication method further includes: authorizing the communication device local processing authorization for auxiliary communication data. Exemplarily, as shown in FIG. 9, the communication method can be implemented as the following S401.

In S401, the first network element sends a third message to the communication device. Correspondingly, the communication device receives the third message sent from the first network element.

The third message is used to indicate local processing authorization for auxiliary communication data.

In some embodiments, the third message includes at least one of: an authorization scope, a characteristic of authorized processing data, or a first device list.

The authorization scope is used to indicate the scope of auxiliary communication data that the communication device is authorized to process.

The authorization scope includes at least one of: auxiliary communication data of a first area; auxiliary communication data of a second area adjacent to the first area. Exemplarily, the first area may be an area to which the communication device belongs, and the second area is an area adjacent to the area to which the communication device belongs. For example, the adjacent area can be a list of cells capable of providing sensing data. The area to which the communication device belongs includes at least one of: the sensing area of the communication device, the positioning area of the communication device, the Al data collection area of the communication device.

In some embodiments, the authorization scope may also include at least one of: a directional scope, or a geographical scope. Directional scope refers to a sector or angular range. Geographical scope refers to a location range within a cell.

The characteristic of the authorized processing data include at least one of: a type of auxiliary communication data, or a level of auxiliary communication data.

In some embodiments, the type of auxiliary communication data includes at least one of: sensing auxiliary data, positioning auxiliary data, Al auxiliary data, or resource configuration auxiliary data.

In some embodiments, the level of auxiliary communication data includes at least one of: raw data, intermediate data, or final results.

Raw data refers to received signals or original channel information, for example, complex results of received signals or channel responses, amplitude and/or phase, I-branch and/or Q-branch, and their correlation results.

Intermediate data refers to data generated from raw data, for example, point cloud data, delay spread spectrum, Doppler spectrum, angle, signal strength, delay-Doppler matrix, and other information generated from raw data.

Final results include at least one of: a positioning-related result, sensing-related results, an Al-related result. a positioning-related result include: a terminal location, a speed, a distance, a trajectory prediction; where the sensing-related results include: a distance, a speed, la ocation, a trajectory prediction, a shape, a size, a material, type of targets in the environment; where the Al-related result include: channel prediction results, MCS prediction results, node prediction results.

The first device list includes identifiers of one or more devices granted to the communication device for processing auxiliary communication data. Exemplarily, the first device list may be a base station list or a terminal list, which is not limited in the embodiments of the present disclosure.

In some embodiments, the first device list may also include at least one of: the type of auxiliary communication data that each device can provide, the characteristics of the authorized processing data for each device.

In some embodiments, a device in the first device list may be neighboring devices of the communication device; or, a device in the first device list is a device associated with the communication device; or, a device in the first device list is a device capable of communicating with the communication device.

In some embodiments, the third message also includes the validity period of the authorized auxiliary communication data for processing.

In some embodiments, in response to the third message includes a first device list, the aforementioned communication method further includes: the first network element sends a sixth message to the devices in the first device list. The sixth message is used to instruct the devices in the first device list to provide auxiliary communication data to the communication device.

In some embodiments, the sixth message includes at least one of: an identifier of the communication device, a validity period of the provided auxiliary communication data, a characteristic of the requested processing data, or a cell identity list.

The characteristic of the requested processing data include at least one of: a type of auxiliary communication data, or a level of auxiliary communication data. The cell identity list includes identifiers of one or more cells requiring cooperation.

In some embodiments, in response to the third message includes a first device list, the communication device may obtain auxiliary communication data from the devices in the first device list, for example, can be implemented as the following b1 and b2.

In b1, the communication device sends a fifth message to the devices in the first device list.

The fifth message is used to request auxiliary communication data. The fifth message includes at least one of: an identifier of the communication device, or a characteristic of the requested auxiliary communication data.

The characteristic of the requested auxiliary communication data include at least one of: type of auxiliary communication data, auxiliary area, identifier of the terminal. The identifier of the terminal includes at least one of: a local identifier, a local area network identifier, a temporary identifier, or a global identifier.

In b2, the communication device receives the auxiliary communication data sent from the devices in the first device list.

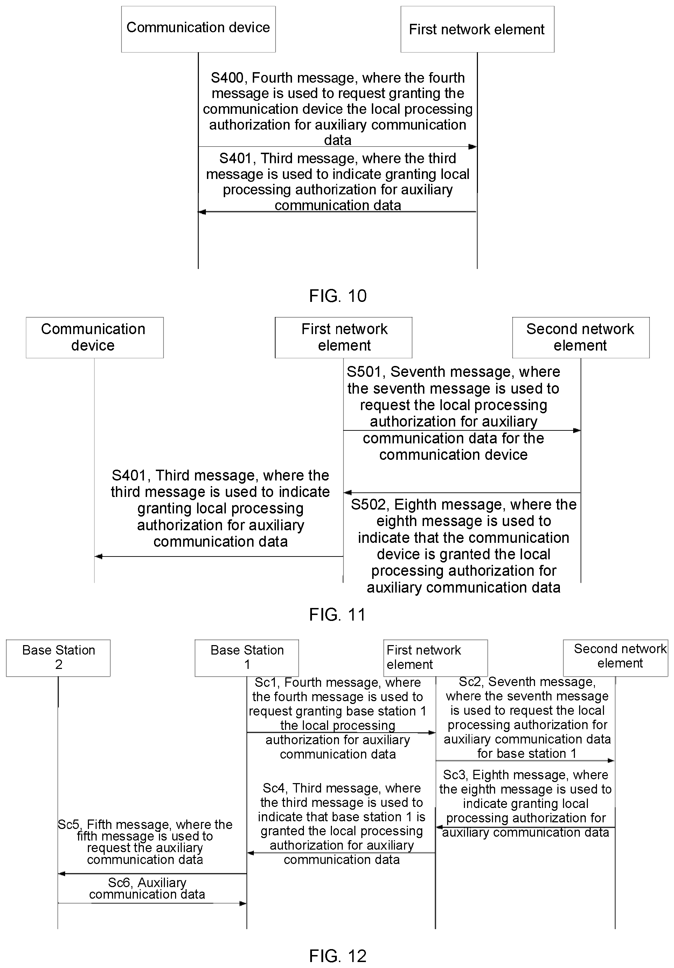

In some embodiments, as shown in FIG. 10, before the aforementioned S401, the aforementioned communication method further includes the following S400.

In S400, the communication device sends a fourth message to the first network element. Correspondingly, the first network element receives the fourth message sent from the communication device.

The fourth message is used to request the capability of local processing for auxiliary communication data to the communication device.

In some embodiments, the fourth message includes at least one of: an identifier of the communication device, a requested scope, a requested validity period for the authorized auxiliary communication data, a characteristic of the requested processing data, or a second device list.

The requested scope is used to indicate the scope of auxiliary communication data that the communication device requests authorization to process. The requested scope includes at least one of: auxiliary communication data of a first area; or auxiliary communication data of a second area adjacent to the first area.

Exemplarily, for the description of the first area and the second area, reference can be made to the aforementioned S401, which will not be repeated herein.

The characteristic of the requested processing data include at least one of: a type of auxiliary communication data, or a level of auxiliary communication data.

Exemplarily, for the description of the type and level of auxiliary communication data, reference can be made to the aforementioned S401, which will not be repeated herein.

The second device list includes identifiers of one or more devices capable of providing auxiliary communication data to the communication device. Exemplarily, the second device list may be a base station list or a terminal list, which is not limited in the embodiments of the present disclosure.

In some embodiments, the second device list may also include a type of auxiliary communication data that each device can provide, and a characteristic of the authorized processing data for each device.

In some embodiments, a device in the second device list may be neighboring devices of the communication device; or, a device in the second device list is a device associated with the communication device; or, a device in the second device list is a device capable of communicating with the communication device.

In some embodiments, the validity period of the authorized auxiliary communication data for processing included in the third message may be less than or equal to the validity period of the requested auxiliary communication data authorized in the fourth message.

In some embodiments, the aforementioned S401 may be implemented as: in response to a fourth message, the first network element sends a third message to the communication device.

It should be understood that in the method provided by the embodiments of the present disclosure, the first network element may actively send an authorization message (i.e., the aforementioned third message) to the communication device, or may send the authorization message to the communication device in response to a request from the communication device (i.e., the aforementioned fourth message).

In some embodiments, prior to the aforementioned S401, the communication method further includes performing, by the first network element, authorization authentication with a second network element. For example, as shown in FIG. 11, the communication method may be implemented as the following S501 and S502.

In S501, the first network element sends a seventh message to the second network element. Correspondingly, the second network element receives the seventh message sent from the first network element.

The seventh message is used to request the local processing authorization for auxiliary communication data on behalf of the communication device.

In some embodiments, the seventh message includes at least one of: an identifier of the communication device, a request scope, a validity period of the requested auxiliary communication data, a characteristic of the requested processing data, and a third device list.

The request scope is used to indicate the scope of the auxiliary communication data for which the communication device is requesting processing authorization. The request scope includes at least one of: auxiliary communication data of a first area; or auxiliary communication data of a second area adjacent to the first area.

For example, explanations regarding the first area and the second area may refer to the aforementioned S401, and are not repeated here.

The characteristic of the requested processing data include at least one of: the type of auxiliary communication data, and the level of auxiliary communication data.

For example, explanations regarding the type and level of auxiliary communication data may refer to the aforementioned S401, which are not repeated herein.

The third device list includes identifiers of one or more devices capable of providing auxiliary communication data to the communication device. For example, the third device list may be a base station list or a terminal list, which is not limited in the embodiments of the present disclosure.

In some embodiments, the third device list may further include at least one of: a type of auxiliary communication data that each device can provide, or a characteristic of the processing data authorized for each device.

In some embodiments, a device in the third device list may be a neighboring device of the communication device; or, a device in the third device list may be a device associated with the communication device; or, a device in the third device list may be a device capable of communicating with the communication device.

In some embodiments, a device in the third device list may be the same as or different from a device in the second device list.

In S502, the second network element sends an eighth message to the first network element. Correspondingly, the first network element receives the eighth message sent from the second network element.

The eighth message is used to indicate that the communication device is authorized local processing authorization for auxiliary communication data.

In some embodiments, the eighth message includes at least one of: an authorization scope, a characteristic of the authorized processing data, or a fourth device list.

The authorization scope is used to indicate the scope of the auxiliary communication data for which the communication device is authorized to process. The authorization scope includes at least one of: auxiliary communication data of a first area; auxiliary communication data of a second area adjacent to the first area.

For example, explanations regarding the first area and the second area may refer to the aforementioned S401, which are not repeated herein.

The characteristic of the authorized processing data include at least one of: a type of auxiliary communication data, or a level of auxiliary communication data.

For example, explanations regarding the type and level of auxiliary communication data may refer to the aforementioned S401, which are not repeated herein.

The fourth device list includes identifiers of one or more devices that authorize the communication device to process auxiliary communication data. For example, the fourth device list may be a base station list or a terminal list, which is not limited in the embodiments of the present disclosure.

In some embodiments, the fourth device list may further include at least one of: a type of auxiliary communication data that each device can provide, or a characteristic of the processing data authorized for each device.

In some embodiments, a device in the fourth device list may be a neighboring device of the communication device; or, a device in the fourth device list may be a device associated with the communication device; or, a device in the fourth device list may be a device capable of communicating with the communication device.

In some embodiments, a device in the fourth device list may be the same as or different from a device in the first device list.

In some embodiments, the eighth message further includes a validity period for the authorized processing of auxiliary communication data.

It should be noted that the process of the first network element performing authorization authentication with the second network element (i.e., the aforementioned S501 and S502) may be executed before or after S400, which is not limited in the embodiments of the present disclosure.

For ease of understanding, the following describes the authorization authentication process provided by the embodiments of the present disclosure, taking the example where the process of the first network element performing authorization authentication with the second network element (i.e., the aforementioned S501 and S502) is executed after S400.

For example, as shown in FIG. 12, assuming the communication device is base station 1, the authorization authentication process according to the embodiments of the present disclosure may be implemented as the following Sc1 to Sc4.

In Sc1, base station 1 sends a fourth message to the first network element. Correspondingly, the first network element receives the fourth message sent from Base Station 1.

The fourth message is used to request authorizing Base Station 1 local processing authorization for auxiliary communication data.

For example, the fourth message includes at least one of: an identifier of base station 1, a request scope, a validity period of the requested authorized auxiliary communication data, a characteristic of the requested processing data, a second base station list.

The second base station list includes identifiers of base stations capable of providing auxiliary communication data to Base Station 1.

In Sc2, the first network element sends a seventh message to the second network element. Correspondingly, the second network element receives the seventh message sent from the first network element.

The seventh message is used to request local processing authorization for auxiliary communication data on behalf of base station 1.

In some embodiments, the seventh message may be derived based on the fourth message. For example, the seventh message includes at least one of: an identifier of base station 1, a request scope, a validity period of the requested auxiliary communication data, a characteristic of the requested processing data, or a second base station list.

In Sc3, the second network element sends an eighth message to the first network element. Correspondingly, the first network element receives the eighth message sent from the second network element.

The eighth message is used to indicate that base station 1 is authorized local processing authorization for auxiliary communication data.

For example, the eighth message includes at least one of: an authorization scope, characteristic of the authorized processing data, or a first base station list.

The first base station list includes identifiers of one or more base stations that authorize base station 1 to process auxiliary communication data.

In Sc4, the first network element sends a third message to base station 1. Correspondingly, base station 1 receives the third message sent from the first network element.

The third message is used to indicate the authorization of local processing for auxiliary communication data.

In some embodiments, the third message may be derived based on the eighth message. For example, the third message includes at least one of: an authorization scope, a characteristic of the authorized processing data, or a first base station list.

In some embodiments, assuming the first base station list includes the identifier of Base Station 2, the communication method may further include the following Sc5 and Sc6.

In Sc5, base station 1 sends a fifth message to Base Station 2. Correspondingly, base station 2 receives the fifth message sent from base station 1.

The fifth message is used to request auxiliary communication data. The fifth message includes at least one of: an identifier of base station 1, a characteristic of the requested auxiliary communication data, or an identifier of a terminal. The characteristic of the requested auxiliary communication data include: a type of auxiliary communication data or an identifier of the terminal. The identifier of the terminal includes at least one of: a local identifier, a local area network identifier, a temporary identifier, or a global identifier.

In some embodiments, prior to the aforementioned Sc5, base station 2 receives a sixth message sent from the first network element. The sixth message is used to instruct base station 2 to provide auxiliary communication data to base station 1.

The sixth message includes at least one of: an identifier of base station 1, a validity period for providing auxiliary communication data, a characteristic of the requested processing data, and a cell identity list.

In Sc6, base station 2 sends auxiliary communication data to base station 1. Correspondingly, base station 1 receives the auxiliary communication data sent from base station 2.

For example, the exchange of auxiliary communication data between base stations may be conducted over the network.

In some other embodiments, an example is provided where the communication device requests local processing authorization for terminal's auxiliary communication data from the first network element.

For example, assuming the communication device is base station 1, the authorization authentication process according to the embodiments of the present disclosure may be implemented as the following d1 to d3.

In d1, base station 1 sends a fourth message to the first network element. Correspondingly, the first network element receives the fourth message sent from base station 1.

The fourth message is used to request authorizing base station 1 local processing authorization for auxiliary communication data.

For example, the fourth message includes at least one of: an identifier of base station 1, a characteristic of the requested processing data, or a terminal list.

The terminal list includes: UE1 and UE2. The characteristic of the requested processing data include: measurement data of UE1 for beam 1 and beam 2; measurement data of UE2 for beam 2 and beam 3. For example, the measurement data of a terminal for a beam may include at least one of: reference signal receiving power (RSRP), an angle, time, other information.

In d2, the first network element sends a third message to base station 1. Correspondingly, base station 1 receives the third message sent from the first network element.

The third message is used to indicate the authorization of local processing for auxiliary communication data.

For example, the third message includes at least one of: a characteristic of the authorized processing data, or a terminal list.

The terminal list includes: UE1 and UE2. The characteristic of the authorized processing data include: measurement data of UE1 for beam 1 and beam 2; measurement data of UE2 for beam 2 and beam 3. For example, the measurement data of a terminal for a beam may include at least one of: reference signal receiving power (RSRP), angle, time, and other information.

In d3, base station 1 receives auxiliary communication data sent from UE1 and UE2.

The auxiliary communication data sent from UE1 includes measurement data of UE1 for beam 1 and beam 2, such as RSRP, angle, time, and other information. The auxiliary communication data sent from UE2 includes measurement data of UE2 for beam 2 and beam 3, such as RSRP, angle, time, and other information.

In some embodiments, UE1 and UE2 are further configured to provide measurement data for all beams to the core network; or, UE1 provides measurement data for beams other than beam 1 and beam 2 to the core network, while UE2 provides measurement data for beams other than beam 2 and beam 3 to the core network. In this case, the base station needs to send the measurement data for beam 1 and beam 2 measured by UE1 to the core network, as well as the measurement data for beam 2 and beam 3 measured by UE2 to the core network.

It should be noted that the type of the first network element is not limited in the embodiments of the present disclosure. For example, the first network element may be a newly added network element in the core network; or, the first network element may support the function by enhancing the capabilities of relevant network elements in the core network. For instance, the first network element may be an enhanced NEF network element, an enhanced AMF network element, etc.

For ease of understanding, the communication method provided by the embodiments of the present disclosure is described below using examples, taking different network elements as the first network element, through three examples.

In the first example, the first network element is a newly added INEF network element in the core network.

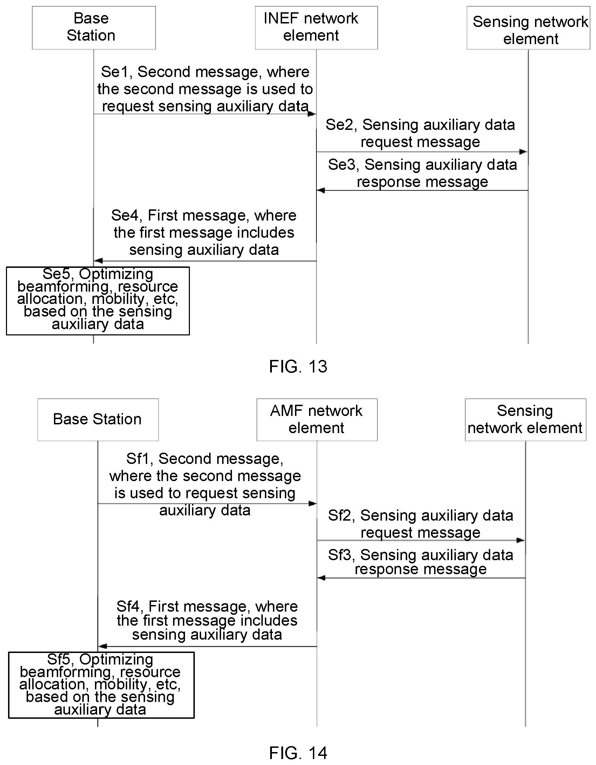

For example, assuming the communication device is a base station, as shown in FIG. 13, another communication method according to an embodiment of the present disclosure may be implemented as the following steps Se1 to Se5.

In Se1, the base station sends a second message to the INEF network element. Correspondingly, the INEF network element receives the second message sent from the base station.

The second message is used to request sensing auxiliary data. For example, the second message may include: an identifier of the base station and a characteristic of the requested auxiliary communication data. The characteristic of the requested auxiliary communication data include: the type of the requested auxiliary communication data (in this embodiment, the type is sensing auxiliary data), and an identifier of the terminal.

In some embodiments, in response to the terminal identifier included in the second message is a local identifier, a Local Area Network identifier, or a temporary identifier, the INEF network element is further configured to convert the terminal identifier into a global identifier.

In Se2, in response to the type of the requested auxiliary communication data is sensing auxiliary data, the INEF network element selects a sensing network element and sends a sensing auxiliary data request message to the sensing network element. Correspondingly, the sensing network element receives the sensing auxiliary data request message.

In Se3, in response to the sensing auxiliary data request message, the sensing network element sends a sensing auxiliary data response message to the INEF network element. Correspondingly, the INEF network element receives the sensing auxiliary data response message sent from the sensing network element.

The sensing auxiliary data response message includes sensing auxiliary data.

In Se4, the INEF network element sends a first message to the base station.

The first message includes the sensing auxiliary data and a validity period of the sensing auxiliary data.

In Se5, the base station can optimize beamforming, resource allocation, mobility, etc., based on the sensing auxiliary data.

In the second example, the first network element is an enhanced AMF network element (hereinafter collectively referred to as the AMF network element for ease of description).

For example, assuming the communication device is a base station, as shown in FIG. 14, another communication method according to an embodiment of the present disclosure may be implemented as the following steps Sf1 to Sf5.

In Sf1, the base station sends a second message to the AMF network element. Correspondingly, the AMF network element receives the second message sent from the base station.

The second message is used to request sensing auxiliary data. For example, the second message may include: an identifier of the base station and a characteristic of the requested auxiliary communication data. The characteristic of the requested auxiliary communication data include: the type of the requested auxiliary communication data (in this embodiment, the type is sensing auxiliary data), and an identifier of the terminal.

In some embodiments, in response to the terminal identifier included in the second message is a local identifier, a Local Area Network identifier, or a temporary identifier, the AMF network element is further configured to convert the terminal identifier into a global identifier.

In Sf2, in response to the type of the requested auxiliary communication data is sensing auxiliary data, the AMF network element selects a sensing network element and sends a sensing auxiliary data request message to the sensing network element. Correspondingly, the sensing network element receives the sensing auxiliary data request message.

In Sf3, in response to the sensing auxiliary data request message, the sensing network element sends a sensing auxiliary data response message to the AMF network element. Correspondingly, the AMF network element receives the sensing auxiliary data response message sent from the sensing network element.

The sensing auxiliary data response message includes sensing auxiliary data.

In Sf4, the AMF network element sends a first message to the base station.

The first message includes the sensing auxiliary data and a validity period of the sensing auxiliary data.

In Sf5, the base station can optimize beamforming, resource allocation, mobility, etc., based on the sensing auxiliary data.

It should be understood that the first network element may also be an enhanced NEF network element. However, if the NEF network element uses existing relevant interfaces, the core network needs to configure the NEF with which the base station needs to communicate and send the identifier of that NEF to the base station. For example, the identifier may be a media access control (MAC) address, an IP address, or another identifier.

To enable communication between the base station and the NEF network element, a new communication interface may be established between the NEF network element and the base station for transmitting control signaling and auxiliary communication data between he NEF network element and the base station; alternatively, control signaling and auxiliary communication data between the base station and the NEF may also be transmitted via the AMF network element.

In the third example, the first network element may be multiple enhanced network elements, for example, an enhanced NEF network element and an enhanced AMF network element (hereinafter collectively referred to as the NEF network element and the AMF network element for ease of description).

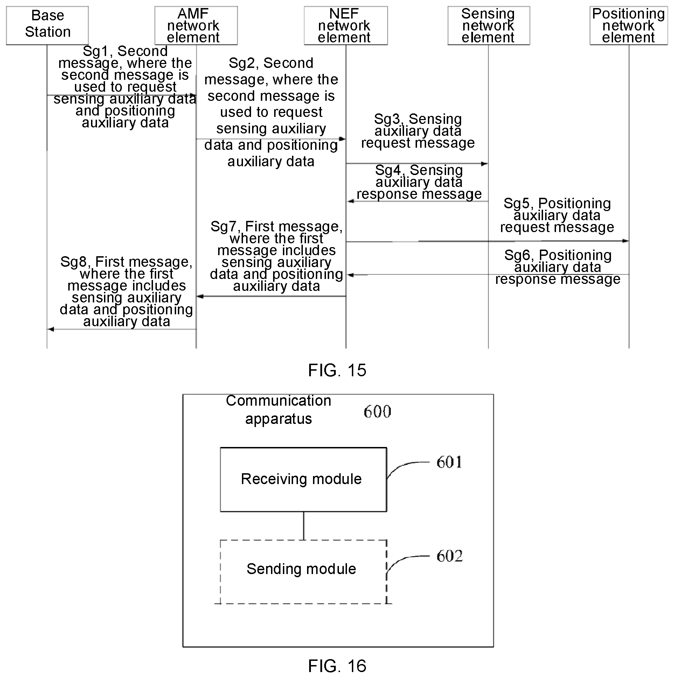

For example, assuming the communication device is a base station, as shown in FIG. 15, another communication method according to the embodiments of the present disclosure may be implemented as the following steps Sg1 to Sg8.

In Sg1, the base station sends a second message to the AMF network element. Correspondingly, the AMF network element receives the second message sent from the base station.

The second message is used to request sensing auxiliary data and positioning auxiliary data. For example, the second message may include: an identifier of the base station or a characteristic of the requested auxiliary communication data. The characteristic of the requested auxiliary communication data include: a type of the requested auxiliary communication data (in this embodiment, the types are sensing auxiliary data and positioning auxiliary data), or an identifier of the terminal.

In Sg2, the AMF network element sends the second message to the NEF network element. Correspondingly, the NEF network element receives the second message sent from the AMF network element.

In some embodiments, in response to the terminal identifier included in the second message is a local identifier, a Local Area Network identifier, or a temporary identifier, the NEF network element is further configured to convert the terminal identifier into a global identifier.

In Sg3, in response to the type of the requested auxiliary communication data includes sensing auxiliary data, the NEF network element selects a sensing network element and sends a sensing auxiliary data request message to the sensing network element. Correspondingly, the sensing network element receives the sensing auxiliary data request message.

In Sg4, in response to the sensing auxiliary data request message, the sensing network element sends a sensing auxiliary data response message to the NEF network element. Correspondingly, the NEF network element receives the sensing auxiliary data response message sent from the sensing network element.

The sensing auxiliary data response message includes sensing auxiliary data.

In Sg5, in response to the type of the requested auxiliary communication data includes positioning auxiliary data, the NEF network element selects a positioning network element and sends a positioning auxiliary data request message to the positioning network element. Correspondingly, the positioning network element receives the positioning auxiliary data request message.

The positioning auxiliary data request message may include the terminal identifier.

In Sg6, in response to the positioning auxiliary data request message, the positioning network element sends a positioning auxiliary data response message to the NEF network element. Correspondingly, the NEF network element receives the positioning auxiliary data response message sent from the positioning network element.

The positioning auxiliary data response message includes positioning auxiliary data.

In some embodiments, after completing the collection of sensing auxiliary data and positioning auxiliary data, the NEF network element also converts the terminal's global identifier to a local identifier, Local Area Network identifier, or temporary identifier.

In Sg7, the NEF network element sends a first message to the AMF network element. Correspondingly, the AMF network element receives the first message sent from the NEF network element.

The first message includes the sensing auxiliary data and positioning auxiliary data, as well as the validity period of the sensing auxiliary data and the validity period of the positioning auxiliary data.

In Sg8, the AMF network element sends the first message to the base station. Correspondingly, the base station receives the first message sent from the AMF network element.

It should be noted that the communication device is not limited in the embodiments of the present disclosure. For example, the communication device may be a base station or a user equipment. For ease of understanding, the communication method provided by the embodiments of the present disclosure is described below taking the communication device as a terminal.

For example, the communication method according to an embodiment of the present disclosure can be implemented as the following steps h1 and h2.

In h1, a requesting terminal sends a second message to the first network element. Correspondingly, the first network element receives the second message sent from the user equipment.

The requesting terminal refers to the terminal requesting auxiliary communication data from the first network element.

The second message is used to request auxiliary communication data. For example, the description of the second message can refer to S200 above, which will not be repeated herein. Of course, in addition to the parameters included in the second message described in S200 above, for the second message sent from the terminal side, it may also include some specific parameters. For example, the second message may further include: a first terminal list, used to indicate information about terminals capable of providing auxiliary communication data to the requesting terminal. For example, the first terminal list may include at least one of: identifiers of terminals, the distance between each terminal and the requesting terminal, and angular information of each terminal.

It should be noted that this auxiliary communication data can be used to assist communication between the terminal and the base station, as well as communication between terminals.

In h2, the first network element sends a first message to the requesting terminal. Correspondingly, the requesting terminal receives the first message sent from the first network element.

The first message includes auxiliary communication data. In some embodiments, the first message further includes: a second terminal list, used to indicate information about terminals providing auxiliary communication data to the requesting terminal. For example, the second terminal list may include at least one of: identifiers of terminals, the distance between each terminal and the requesting terminal, and angular information of each terminal.

In some embodiments, in response to the first network element interacts with other network elements in the core network (e.g., a third network element, a second network element), it may also carry terminal lists (e.g., the first terminal list and/or the second terminal list).

The above primarily describes the solutions of the embodiments of the present disclosure from the perspective of methods. It is understood that to implement the aforementioned functions, the communication apparatus includes at least one of corresponding hardware structures and software modules for performing each function. Those skilled in the art should readily appreciate that the embodiments of the present disclosure can be implemented in hardware or a combination of hardware and computer software, based on the described unit and algorithm steps of each example combined with the embodiments disclosed herein. Whether a specific function is executed by hardware or computer software driving hardware depends on the specific application and design constraints of the technical solution. Professionals can use different methods for each specific application to implement the described functions, but such implementation should not be considered beyond the scope of the embodiments of the present disclosure.

It should be understood that to implement the above functions, the communication apparatus includes corresponding hardware structures and/or software modules for performing each function. Those skilled in the art should easily recognize that the present disclosure may be implemented in hardware or a combination of hardware and computer software, based on the algorithm steps of the various examples described in the embodiments of the present disclosure. Whether a specific function is executed by hardware or computer software driving hardware depends on the specific application and design constraints of the technical solution. Professionals can use different methods for each specific application to implement the described functions, but such implementation should not be considered beyond the scope of the present disclosure.

The embodiments of the present disclosure can divide functional modules of the communication device according to the aforementioned method embodiments. For example, each function can be divided into a separate functional module, or two or more functions can be integrated into one functional module. The integrated modules can be implemented in hardware or software. It should be noted that the division of modules in the embodiments of the present disclosure is illustrative, merely a logical functional division, and actual implementation may involve other division methods. The following description uses dividing each function into a separate functional module as an example.

FIG. 16 is a schematic structural diagram of a communication apparatus according to the embodiments of the present disclosure. This communication apparatus is applied to a communication device and can execute the communication method provided in the foregoing method embodiments. As shown in FIG. 16, the communication apparatus 600 includes: a receiving module 601. In some other embodiments, the communication apparatus 600 further includes a sending module 602.

The receiving module 601 is configured to receive a first message sent from a first network element. The first message includes auxiliary communication data, and the auxiliary communication data is used to optimize a communication function of the communication device.

In some embodiments, the auxiliary communication data includes at least one of types: sensing auxiliary data, positioning auxiliary data, artificial intelligence (AI) auxiliary data, resource configuration auxiliary data.

In some embodiments, different sensing types correspond to different characteristics of a sensing target. The sensing type includes at least one of: weather monitoring, environment reconstruction, object detection. The characteristic of the sensing target include at least one of: a sensing target size, a sensing target location, a location of a sensing target relative to a reference base station, a moving speed of the sensing target, a moving direction of the sensing target, a rainfall, a snowfall, a flood water level change, a line-of-sight (LOS) or a non-line-of-sight (NLOS).

In some embodiments, the positioning auxiliary data includes: an identifier of a terminal and positioning information corresponding to the identifier of the terminal. The positioning information includes at least one of: a global location of the terminal, a location of the terminal relative to a reference base station, an angle of the terminal relative to a reference base station, a distance of the terminal relative to a reference base station, a moving speed of the terminal, a moving direction of the terminal, a moving trajectory of the terminal.

In some embodiments, the Al auxiliary data includes at least one of: current information of a channel, or predicted information of a channel.

In some embodiments, the resource configuration auxiliary data includes at least one of: a time domain resource, a frequency domain resource, beam transmission direction, modulation and coding strategy (MCS), a change frequency of transmission resources.

In some embodiments, the first message further includes a type of message response. The type of message response includes at least one of: an event-triggered response, a periodic response, or a request response.

In some embodiments, the first message further includes a validity period of the auxiliary communication data.

In some embodiments, the sending module 602 is configured to send a second message to the first network element. The second message is used to request the auxiliary communication data.

In some embodiments, the second message includes at least one of: an identifier of the communication device, or a characteristic of the requested auxiliary communication data.

In some embodiments, the characteristic of the requested auxiliary communication data include at least one of: a type of the auxiliary communication data, an auxiliary area, an identifier of a user equipment. The identifier of the terminal includes at least one of: a local identifier, a Local Area Network identifier, a temporary identifier, or a global identifier.

In some embodiments, the receiving module 601 is further configured to receive a third message sent from the first network element. The third message is used to indicate authorizing a local processing authorization for the auxiliary communication data.

In some embodiments, the third message includes at least one of: an authorization scope, a characteristic of authorized processing data, or a first device list. The authorization scope is used to indicate the scope of the auxiliary communication data that the communication device is authorized to process. The authorization scope includes at least one of: auxiliary communication data of a first area; or auxiliary communication data of a second area adjacent to the first area. The characteristic of the authorized processing data include at least one of: a type of the auxiliary communication data, or a level of the auxiliary communication data. The first device list includes identifiers of one or more devices that authorize the communication device to process the auxiliary communication data.

In some embodiments, the type of the auxiliary communication data includes at least one of: sensing auxiliary data, positioning auxiliary data, Al auxiliary data, resource configuration auxiliary data. The level of the auxiliary communication data includes at least one of: raw data, intermediate data, or final result.

In some embodiments, the receiving module 601 is further configured to receive auxiliary communication data sent from devices in the first device list.

In some embodiments, the sending module 602 is further configured to send a fifth message to a device in the first device list, the fifth message being used to request auxiliary communication data. The fifth message includes at least one of: an identifier of the communication device, or a characteristic of the auxiliary communication data.

In some embodiments, the characteristic of the requested auxiliary communication data include at least one of: a type of the auxiliary communication data, an auxiliary region, an identifier of a terminal. The identifier of the terminal includes at least one of: a local identifier, a Local Area Network identifier, a temporary identifier, or a global identifier.

In some embodiments, the sending module 602 is further configured to send a fourth message to the first network element. The fourth message is used to request authorizing the communication device the local processing authorization for the auxiliary communication data.

In some embodiments, the fourth message includes at least one of: an identifier of the communication device, a requested scope, a validity period of the requested authorization for the auxiliary communication data, a characteristic of requested processing data, or a second device list. The requested scope is used to indicate the scope of the auxiliary communication data for which the communication device requests the processing authorization. The requested scope includes at least one of: auxiliary communication data of a first area; or auxiliary communication data of a second area adjacent to the first area. The characteristic of the requested processing data include at least one of: a type of the auxiliary communication data, or a level of the auxiliary communication data. The second device list includes identifiers of one or more devices capable of providing auxiliary communication data to the communication device.

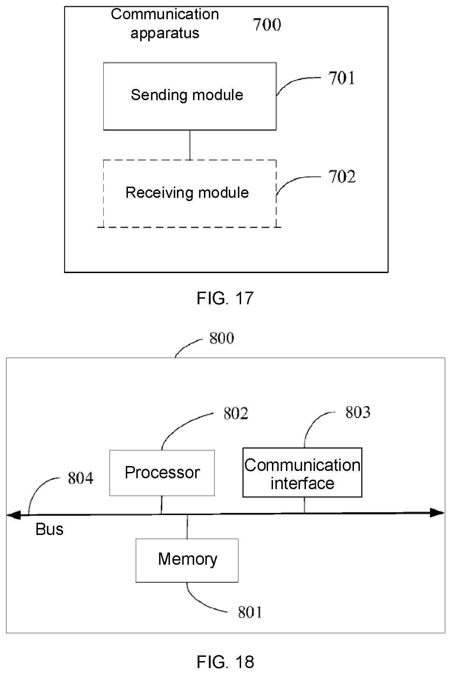

FIG. 17 is a schematic structural diagram of another communication apparatus according to the embodiments of the present disclosure. This communication apparatus is applied to a first network element and can execute the communication method provided in the foregoing method embodiments. As shown in FIG. 17, the communication apparatus 700 includes: a sending module 701. In some other embodiments, the communication apparatus 700 further includes: a receiving module 702.

The sending module 701 is configured to send a first message to a communication device. The first message includes auxiliary communication data, and the auxiliary communication data is used to optimize a communication function of the communication device.

In some embodiments, the auxiliary communication data includes at least one of types: sensing auxiliary data, positioning auxiliary data, artificial intelligence (AI) auxiliary data, resource configuration auxiliary data.

In some embodiments, the receiving module 702 is configured to receive a second message sent from the communication device, the second message being used to request the auxiliary communication data. The sending module 701 is optionally configured to, in response to the second message, send the first message to the first device.

In some embodiments, the second message includes at least one of: an identifier of the communication device, a characteristic of the requested auxiliary communication data.

In some embodiments, the characteristic of the requested auxiliary communication data include at least one of: a type of the auxiliary communication data, an auxiliary area, or an identifier of a terminal. The identifier of the terminal includes at least one of: a local identifier, a Local Area Network identifier, a temporary identifier, or a global identifier.

In some embodiments, the sending module 701 is optionally configured to send the first message to the communication device in response to a first condition is met. The first condition includes at least one of: detection of a change in a LOS path between the communication device and a terminal; detection of a change in the location of the terminal; detection of a change in the location of objects around the terminal; detection of a change in the number of objects around the terminal; detection of a weather change; detection of a channel change.

In some embodiments, the sending module 701 is optionally configured to send the first message to the communication device according to a preset sending period.

In some embodiments, the sending module 701 is further configured to send a third message to the communication device. The third message is used to indicate authorizing the communication device the local processing authorization for the auxiliary communication data.

In some embodiments, the third message includes at least one of: an authorization scope, a characteristic of authorized processing data, or a first device list. The authorization scope is used to indicate the scope of the auxiliary communication data that the communication device is authorized to process. The authorization scope includes at least one of: auxiliary communication data of a first area; or auxiliary communication data of a second area adjacent to the first area. The characteristic of the authorized processing data include at least one of: a type of the auxiliary communication data, or a level of the auxiliary communication data. The first device list includes identifiers of one or more devices that authorize the communication device to process the auxiliary communication data.

In some embodiments, the sending module 701 is further configured to send a sixth message to a device in the first device list. The sixth message is used to instruct the device in the first device list to provide auxiliary communication data to the communication device.

In some embodiments, the sixth message includes at least one of: an identifier of the communication device, a validity period of the provided auxiliary communication data, characteristics of requested processing data, a cell identity list. The characteristic of the requested processing data include at least one of: a type of the auxiliary communication data, a level of the auxiliary communication data. The cell identity list includes identifiers of one or more cells requiring cooperation.

In some embodiments, the receiving module 702 is further configured to receive a fourth message sent from the communication device. The fourth message is used to request authorizing the local processing authorization for the auxiliary communication data.

In some embodiments, the fourth message includes at least one of: an identifier of the communication device, a requested scope, a validity period of the requested grant for the auxiliary communication data, a characteristic of requested processing data, or a second device list. The requested scope is used to indicate the scope of the auxiliary communication data for which the communication device requests the processing authorization. The requested scope includes at least one of: auxiliary communication data of a first area; or auxiliary communication data of a second area adjacent to the first area. The characteristic of the requested processing data include at least one of: a type of the auxiliary communication data, or a level of the auxiliary communication data. The second device list includes identifiers of one or more devices capable of providing auxiliary communication data to the communication device.

In some embodiments, the sending module 701 is optionally configured to, in response to the fourth message, send the third message to the communication device.

In some embodiments, the sending module 701 is further configured to send a seventh message to a second network element. The seventh message is used to request the local processing authorization for the auxiliary communication data for the communication device. The seventh message includes at least one of: an identifier of the communication device, a requested scope, a validity period of the requested grant for the auxiliary communication data, a characteristic of requested processing data, or a third device list. The requested scope is used to indicate the scope of the auxiliary communication data for which the communication device requests the processing authorization. The requested scope includes at least one of: auxiliary communication data of a first area; or auxiliary communication data of a second area adjacent to the first area. The characteristic of the requested processing data include at least one of: a type of the auxiliary communication data, a level of the auxiliary communication data. The third device list includes identifiers of one or more devices capable of providing auxiliary communication data to the communication device.

In some embodiments, the receiving module 702 is further configured to receive an eighth message sent from the second network element. The eighth message is used to indicate that the communication device is authorized the local processing authorization for the auxiliary communication data. The eighth message includes at least one of: an authorization scope, a characteristic of authorized processing data, or a fourth device list. The authorization scope is used to indicate the scope of the auxiliary communication data that the communication device is authorized to process. The authorization scope includes at least one of: auxiliary communication data of a first area; auxiliary communication data of a second area adjacent to the first area. The characteristics of the authorized processing data include at least one of: a type of the auxiliary communication data, or a level of the auxiliary communication data. The fourth device list includes identifiers of one or more devices that authorize the communication device to process the auxiliary communication data.

In the case where the functions of the above integrated modules are implemented in hardware, the embodiments of the present disclosure provide another optional structure of the communication apparatus involved in the foregoing embodiments. As shown in FIG. 18, the communication apparatus 800 includes: a processor 802, and a bus 804. Optionally, the communication apparatus may further include a memory 801. Optionally, the communication apparatus 800 may further include a communication interface 803.

The processor 802 may be configured to implement or execute the various exemplary logical blocks, modules, and circuits described in connection with the embodiments of the present disclosure. The processor 802 may be a central processing unit, a general-purpose processor, a digital signal processor, an application-specific integrated circuit, a field programmable gate array or other programmable logic device, a transistor logic device, a hardware component, or any combination thereof. It may implement or perform the various exemplary logical blocks, modules, and circuits described in connection with the embodiments of the present disclosure. The processor 802 may also be a combination for performing computing functions, such as a combination including one or more microprocessors, a combination of a DSP and a microprocessor, etc.

The communication interface 803 is configured to connect with other devices via a communication network. The communication network may be Ethernet, a radio access network, a wireless local area network (WLAN), etc.

The memory 801 may be a read-only memory (ROM) or other type of static storage device that can store static information and instructions, a random access memory (RAM) or other type of dynamic storage device that can store information and instructions, or may be an electrically erasable programmable read-only memory (EEPROM), a magnetic disk storage medium or other magnetic storage device, or any other medium that can be used to carry or store desired program code in the form of instructions or data structures and that can be accessed by a computer, but is not limited thereto.

As an optional implementation, the memory 801 may exist independently of the processor 802. The memory 801 may be connected to the processor 802 via the bus 804 for storing instructions or program code. In response to the processor 802 calls and executes the instructions or program code stored in the memory 801, the communication method provided by the embodiments of the present disclosure can be implemented. In another optional implementation, the memory 801 may also be integrated with the processor 802.

The bus 804 may be an extended industry standard architecture (EISA) bus, etc. The bus 804 can be divided into an address bus, a data bus, a control bus, etc. For ease of representation, only one thick line is used in FIG. 18, but this does not mean that there is only one bus or one type of bus.

Some embodiments of the present disclosure provide a computer-readable storage medium (e.g., a non-transitory computer-readable storage medium). The computer-readable storage medium stores computer program instructions which, in response to run on a computer, cause the computer to execute the communication method according to any one of the foregoing embodiments. Exemplarily, the aforementioned computer-readable storage medium may include, but is not limited to: magnetic storage devices (e.g., hard disks, floppy disks, or magnetic tapes, etc.), optical disks (e.g., compact disk (CD), digital versatile disk (DVD), etc.), smart cards, and flash memory devices (e.g., erasable programmable read-only memory (EPROM), cards, sticks, or key drives, etc.). The various computer-readable storage media described in this disclosure may represent one or more devices and/or other machine-readable storage media for storing information. The term "machine-readable storage medium" may include, but is not limited to, wireless channels and various other media capable of storing, containing, and/or carrying instructions and/or data.

An embodiment of the present disclosure provides a computer program product containing instructions. in response to the computer program product runs on a computer, it causes the computer to execute the communication method according to any one of the foregoing embodiments.

In the communication technical solution provided by the embodiments of the present disclosure, the communication device can receive the first message sent from the first network element, where the first message includes auxiliary communication data used to optimize the communication function of the communication device. It can be seen that the technical solution provided by the embodiments of the present disclosure enables the communication device to obtain auxiliary communication data, and further, optimize the communication function of the communication device based on the auxiliary communication data, thereby improving communication performance.

The above descriptions are merely specific implementations of the present disclosure, but the protection scope of the present disclosure is not limited thereto. Any changes or substitutions within the technical scope disclosed in the present disclosure should be covered within the protection scope of the present disclosure. Therefore, the protection scope of the present disclosure shall be subject to the protection scope of the claims.

## Claims

1. A communication method, applied to a communication device, comprising:
receiving a first message sent from a first network element, wherein the first message comprises auxiliary communication data, and the auxiliary communication data is used to optimize a communication function of the communication device.

2. The method according to claim 1, wherein the auxiliary communication data comprises at least one of: sensing auxiliary data, positioning auxiliary data, artificial intelligence (AI) auxiliary data, or resource configuration auxiliary data.

3. The method according to claim 2, wherein the sensing auxiliary data comprises at least one of: a sensing area, a sensing type, sensing time, a sensing dimension, a characteristic of a sensing target, an identifier of a reference base station, or a location of a reference base station.

4. The method according to claim 3, wherein different sensing types correspond to different characteristics of the sensing target;
wherein a sensing type comprises at least one of: weather monitoring, environment reconstruction, or object detection;
wherein characteristics of a sensing target comprise at least one of: a sensing target size, a sensing target location, a location of a sensing target relative to a reference base station, a moving speed of the sensing target, a moving direction of a sensing target, a rainfall, a snowfall, a flood water surface level change, a line-of-sight (LOS) or a non-line-of-sight (NLOS).

5. The method according to claim 2, wherein the positioning auxiliary data comprises: an identifier of a terminal and positioning information corresponding to the identifier of the terminal;
wherein the positioning information comprises at least one of: a global location of the terminal, a location of the terminal relative to a reference base station, an angle of the terminal relative to the reference base station, a distance of the terminal relative to the reference base station, a moving speed of the terminal, a moving direction of the terminal, or a moving trajectory of the terminal.

6. The method according to claim 2, wherein the Al auxiliary data comprises at least one of: current information of a channel, predicted information of a channel.

7. The method according to claim 2, wherein the resource configuration auxiliary data comprises at least one of: a time domain resource, a frequency domain resource, a beam transmission direction, a modulation and coding strategy (MCS), or a change frequency of transmission resource.

8. The method according to claim 1, wherein the first message further comprises a type of message response;
wherein the type of message response comprises at least one of: an event-triggered response, a periodic response, or a request response.

9. The method according to claim 1, wherein the first message further comprises a validity period of the auxiliary communication data.

10. The method according to claim 1, further comprising:
sending a second message to the first network element, wherein the second message is used to request the auxiliary communication data.

11. The method according to claim 10, wherein the second message comprises at least one of: an identifier of the communication device, or a characteristic of a requested auxiliary communication data.

12. The method according to claim 11, wherein the characteristic of the requested auxiliary communication data comprises at least one of: a type of the auxiliary communication data, an auxiliary area, an identifier of a terminal;
wherein the identifier of the terminal comprises at least one of: a local identifier, a local area network identifier, a temporary identifier, or a global identifier.

13. The method according to claim 1, further comprising:
receiving a third message sent from the first network element, wherein the third message is used to indicate authorizing local processing authorization for the auxiliary communication data.

14. The method according to claim 13, wherein the third message comprises at least one of: an authorization scope, a characteristic of authorized processing data, or a first device list;
wherein the authorization scope is used to indicate a scope of auxiliary communication data that the communication device is authorized to process, and the authorization scope comprises at least one of: auxiliary communication data of a first area; or auxiliary communication data of a second area adjacent to the first area;
wherein the characteristic of the authorized processing data comprises at least one of: a type of auxiliary communication data, a level of auxiliary communication data;
wherein the first device list comprises identifiers of one or more devices that authorize the communication device to process the auxiliary communication data.

15. The method according to claim 14, wherein the type of auxiliary communication data comprises at least one of: sensing auxiliary data, positioning auxiliary data, Al auxiliary data, or resource configuration auxiliary data;
wherein the level of auxiliary communication data comprises at least one of: raw data, intermediate data, or a final result.

16. The method according to claim 14, further comprising:
receiving auxiliary communication data sent from a device in the first device list.

17. The method according to claim 16, further comprising:
sending a fifth message to a device in the first device list, wherein the fifth message is used to request the auxiliary communication data; wherein the fifth message comprises at least one of: an identifier of the communication device, a characteristic of a requested auxiliary communication data.

18. The method according to claim 17, wherein the characteristic of the requested auxiliary communication data comprises at least one of: a type of auxiliary communication data, an auxiliary area, or an identifier of a terminal;
wherein the identifier of the terminal comprises at least one of: a local identifier, a local area network identifier, a temporary identifier, or a global identifier.

19. The method according to claim 13, further comprising:
sending a fourth message to the first network element, wherein the fourth message is used to request authorizing the communication device the local processing authorization for the auxiliary communication data.

20. The method according to claim 19, wherein the fourth message comprises at least one of: an identifier of the communication device, a requested scope, a validity period of auxiliary communication data requested to be authorized, a characteristic of requested processing data, or a second device list;
wherein the requested scope is used to indicate a scope of auxiliary communication data requested to be authorized to the communication device for processing, and the requested scope comprises at least one of: auxiliary communication data of a first area; or auxiliary communication data of a second area adjacent to the first area;
wherein the characteristic of the requested processing data comprises at least one of: a type of auxiliary communication data, or a level of auxiliary communication data;
wherein the second device list comprises identifiers of one or more devices capable of providing auxiliary communication data to the communication device.

21. A communication method, applied to a first network element, comprising:
sending a first message to a communication device, wherein the first message comprises auxiliary communication data, and the auxiliary communication data is used to optimize a communication function of the communication device.

22. The method according to claim 21, wherein the auxiliary communication data comprises at least one of: sensing auxiliary data, positioning auxiliary data, artificial intelligence (AI) auxiliary data, or resource configuration auxiliary data.

23. The method according to claim 21, further comprising:
receiving a second message sent from the communication device, wherein the second message is used to request the auxiliary communication data;
wherein the sending the first message to the communication device comprises:
sending the first message to the communication device in response to the second message.

24. The method according to claim 23, wherein the second message comprises at least one of: an identifier of the communication device, or a characteristic of requested auxiliary communication data.

25. The method according to claim 24, wherein the characteristic of the requested auxiliary communication data comprises at least one of: a type of auxiliary communication data, an auxiliary area, or an identifier of a terminal;
wherein the identifier of the terminal comprises at least one of: a local identifier, a local area network identifier, a temporary identifier, or a global identifier.

26. The method according to claim 21, wherein the sending the first message to the communication device comprises:
sending the first message to the communication device in a case where a first condition is met; wherein the first condition comprises at least one of:
detecting a change in a line-of-sight (LOS) path between the communication device and a terminal;
detecting a change in a location of a terminal;
detecting a change in locations of objects around a terminal;
detecting a change in the number of objects around a terminal;
detecting a change in weather; or
detecting a change in channel.

27. The method according to claim 21, wherein the sending the first message to the communication device comprises:
sending the first message to the communication device according to a preset sending period.

28. The method according to claim 21, further comprising:
sending a third message to the communication device, wherein the third message is used to indicate authorizing the communication device local processing authorization for the auxiliary communication data.

29. The method according to claim 28, wherein the third message comprises at least one of: an authorization scope, a characteristic of authorized processing data, or a first device list;
wherein the authorization scope is used to indicate a scope of auxiliary communication data that the communication device is authorized to process, and the authorization scope comprises at least one of: auxiliary communication data of a first area; or auxiliary communication data of a second area adjacent to the first area;
the characteristic of the authorized processing data comprises at least one of: a type of auxiliary communication data, or a level of auxiliary communication data;
the first device list comprises identifiers of one or more devices that authorize the communication device to process the auxiliary communication data.

30. The method according to claim 29, further comprising:
sending a sixth message to a device in the first device list, wherein the sixth message is used to indicate a device in the first device list to provide auxiliary communication data to the communication device.

31. The method according to claim 30, wherein the sixth message comprises at least one of: an identifier of the communication device, a validity period of provided auxiliary communication data, a characteristic of requested processing data, or a cell identity list;
wherein the characteristic of the requested processing data comprise at least one of: a type of the auxiliary communication data, or a level of the auxiliary communication data;
wherein the cell identity list comprises identifiers of one or more cells requiring cooperation.

32. The method according to claim 28, further comprising:
receiving a fourth message sent from the communication device, wherein the fourth message is used to request authorizing the local processing authorization for the auxiliary communication data.

33. The method according to claim 32, wherein the fourth message comprises at least one of: an identifier of the communication device, a requested scope, a validity period of auxiliary communication data requested to be authorized, a characteristic of requested processing data, or a second device list;
wherein the requested scope is used to indicate a scope of auxiliary communication data requested to be authorized to the communication device for processing, and the requested scope comprises at least one of: auxiliary communication data of a first area; or auxiliary communication data of a second area adjacent to the first area;
wherein the characteristic of the requested processing data comprises at least one of: a type of auxiliary communication data, or a level of auxiliary communication data;
wherein the second device list comprises identifiers of one or more devices capable of providing auxiliary communication data to the communication device.

34. The method according to claim 32, wherein the sending the third message to the communication device comprises:
sending the third message to the communication device in response to the fourth message.

35. The method according to claim 21 or 28, further comprising:
sending a seventh message to a second network element, wherein the seventh message is used to request, for the communication device, local processing authorization for the auxiliary communication data; wherein the seventh message comprises at least one of: an identifier of the communication device, a requested scope, a validity period of auxiliary communication data requested to be authorized, a characteristic of requested processing data, or a third device list;
wherein the requested scope is used to indicate a scope of auxiliary communication data requested to be authorized to the communication device for processing, and the requested scope comprises at least one of: auxiliary communication data of a first area; or auxiliary communication data of a second area adjacent to the first area;
the characteristic of the requested processing data comprises at least one of: a type of auxiliary communication data, or a level of auxiliary communication data;
the third device list comprises identifiers of one or more devices capable of providing auxiliary communication data to the communication device.

36. The method according to claim 35, further comprising:
receiving an eighth message sent from the second network element, wherein the eighth message is used to indicate that the communication device is authorized the local processing authorization for the auxiliary communication data; wherein the eighth message comprises at least one of: an authorization scope, a characteristic of authorized processing data, or a fourth device list;
wherein the authorization scope is used to indicate a scope of auxiliary communication data that the communication device is authorized to process, and the authorization scope comprises at least one of: auxiliary communication data of a first area; or auxiliary communication data of a second area adjacent to the first area;
the characteristic of the authorized processing data comprises at least one of: a type of auxiliary communication data, or a level of auxiliary communication data;
the fourth device list comprises identifiers of one or more devices that authorize the communication device the to process the auxiliary communication data.

37. A communication apparatus, comprising: a memory and a processor; wherein the memory is coupled to the processor; the memory is configured to store instructions executable by the processor; and the processor is configured to, upon executing the instructions, perform the method according to any one of claims 1 to 36.

38. A computer-readable storage medium, wherein the computer-readable storage medium has computer instructions stored thereon, and in response to the computer instructions are run in an electronic device, the electronic device is enabled to perform the method according to any one of claims 1 to 36.
